# EUROPEAN PATENT SPECIFICATION

(11) **EP 4 614 678 B1**
(45) Date of publication and mention of the grant of the patent: **18.11.2026**
(21) Application number: 24179073.2
(22) Date of filing: 30.05.2024
(51) Int. Cl.: H01M 10/627, H01M 10/635, H01M 10/655, H01M 10/6563, H01M 10/6568, H01M 10/66

(54) **ENERGY STORAGE BOX**
ENERGIESPEICHERKASTEN
BOÎTE DE STOCKAGE D'ÉNERGIE

(30) Priority: 08.03.2024 CN 202410268824
(43) Date of publication of application: 10.09.2025
(73) Proprietor: Beijing Hyperstrong Technology Co., Ltd., Beijing 100094 (CN)
(72) Inventor: SUN, Zhonghao, Beijing, 100094 (CN); PENG, Gehao, Beijing, 100094 (CN); LI, Shuang, Beijing, 100094 (CN); QIAN, Hao, Beijing, 100094 (CN); LI, Wenpeng, Beijing, 100094 (CN)
(74) Representative: Santarelli

(56) References cited:
- EP-A1- 4 307 439
- US-A1- 2023 147 331

## Description

### TECHNICAL FIELD

The present application relates to the technical field of thermal management of energy storage boxes, and specifically relates to an energy storage box.

### BACKGROUND

In the technical fields of micro-grids or new energy power plants such as wind power plants, photovoltaic power plants, and the like, it is generally necessary to dispose an energy storage box so as to satisfy mobile power requirements.

The energy storage box includes a box body, a battery pack, a power conversion system (PCS), and a temperature control system. The PCS and the battery pack are correspondingly disposed so as to monitor charging and discharging processes of a battery. Since working temperatures of the PCS and the battery pack are different, the temperature control system performs heat exchange on the PCS in an air-cooling manner, and performs heat exchange on the battery pack in a liquid-cooling manner, so that the battery pack and the PCS work stably.

US 2023/147331 Al discloses an energy storage system comprising a battery pack having a plurality of battery cells; a power converter configured to convert electricity so as to charge or discharge the plurality of battery cells; a pump configured to provide a fluid for the battery pack or the power converter; a radiator configured to heat-exchange the fluid with air; a first valve configured to receive the fluid from the pump and to selectively provide the received fluid to the power converter or to the battery pack; and a second valve configured to receive the fluid from the power converter and to selectively provide the received fluid to the battery pack or to the radiator.

However, both working manners and control manners of air-cooling and liquid-cooling are different, which reduces a thermal management efficiency of the energy storage box.

### SUMMARY

The present application provides an energy storage box, which can improve the thermal management efficiency of the energy storage box and reduce the energy consumption at the same time.

In order to achieve the above objects, the present application adopts the following technical solutions:
the present application provides an energy storage box, including a box body, a battery pack, a power conversion system and a thermal management system; where the box body includes a battery cabin, the battery pack and the power conversion system are located in the battery cabin, the power conversion system is electrically connected with the battery pack, the battery pack has a first liquid path, and the power conversion system has a second liquid path;
where the thermal management system is partially located outside the battery cabin, the thermal management system includes a first loop, a second loop and a monitoring unit; the first loop includes a first heat exchanger, a compressor and a second heat exchanger; the first heat exchanger, the compressor and the second heat exchanger are communicated head-to-tail in sequence, the first heat exchanger and the first liquid path are correspondingly disposed; a refrigerant flows in the first loop, the compressor is configured to control the refrigerant to flow in the first loop so as to dissipate heat of a preset liquid in the first liquid path by the refrigerant;
where the second loop includes a radiator and a solenoid valve, the second liquid path is in communication with the radiator, the first liquid path and the radiator are connected in parallel to the second liquid path, and the solenoid valve is disposed between the second liquid path and the first liquid path;
where the monitoring unit includes a temperature sensor and a controller, the temperature sensor is electrically connected with the controller, the temperature sensor is configured to monitor a temperature outside the box body, the controller is electrically connected with the solenoid valve and the compressor; the controller is configured to drive the solenoid valve when the temperature is equal to a preset temperature value, so that a part of the preset liquid in the second liquid path flows through the first liquid path.

The energy storage box provided by the present application implements the unification of heat dissipation manners of the battery pack and the power conversion system through the thermal management system, and improves the integration level of the thermal management system of the energy storage box. Meanwhile, working states of the first loop and the second loop, and communication states between the second liquid path and the first liquid path are adjusted by the controller according to the temperature outside the box body, so that the preset liquid in the second liquid path flows into the first liquid path of the battery pack. In this way, the preset liquid in the second liquid path and the preset liquid in the first liquid path together dissipate heat to the battery pack and the power conversion system, and at this time, the rotation speed of the compressor may be gradually reduced, and the energy consumption of heat dissipation of the first loop is gradually reduced. Furthermore, compared with the prior art, the air-cooling heat dissipation structure of the power conversion system is omitted, and the space occupation ratio of the overall structure of the energy storage box is reduced, further improving the energy density of the energy storage station.

As a possible embodiment, when the temperature is less than the preset temperature value, the controller controls the refrigerant to stop flowing, and drives the solenoid valve, so that a part of the preset liquid in the second liquid path flows through the first liquid path;
the preset temperature value is 0 degrees Celsius.

As a possible embodiment, there are at least two radiators, and the at least two radiators are connected in parallel to the second liquid path;
there are at least two solenoid valves, one of the at least two solenoid valves and one of the at least two radiators are correspondingly disposed, and one of the at least two solenoid valves is connected in series between the second liquid path and corresponding radiator.

As a possible embodiment, the first loop further includes an oil separator and a gas-liquid separator, the oil separator is disposed between the compressor and the second heat exchanger; and the compressor, the oil separator and the second heat exchanger are sequentially communicated;
the gas-liquid separator is disposed between the first heat exchanger and the compressor; and the first heat exchanger, the gas-liquid separator and the compressor are sequentially communicated.

As a possible embodiment, there are at least two second heat exchangers, and the at least two second heat exchangers are connected in parallel between the compressor and the first heat exchanger.

As a possible embodiment, the box body further includes a device control cabin, the device control cabin and the battery cabin are disposed at intervals along a length direction of the box body, the compressor is located in the device control cabin, and a top of the device control cabin is in communication with the outside of the box body.

As a possible embodiment, the second heat exchanger and the radiator are disposed at intervals along the length direction of the box body at an outer top of the box body.

As a possible embodiment, the thermal management system further includes a first draught fan and a second draught fan, the first draught fan and the second heat exchanger are correspondingly disposed, the first draught fan is connected with a top of the box body, and the first draught fan is configured to dissipate heat of the second heat exchanger;
the second draught fan and the radiator are correspondingly disposed, the second draught fan is connected with the top of the box body, and the second draught fan is configured to dissipate heat of the radiator.

As a possible embodiment, at least one of the first draught fan and the second draught fan includes a housing and a fan, the housing has an accommodating cavity, a top of the accommodating cavity has a first vent, and the fan is located in the accommodating cavity so as to discharge air in the accommodating cavity along the first vent;
a side wall of the housing is provided with a second vent, the second vent is in communication with the accommodating cavity; a top of the housing is provided with a third vent, the third vent and the second vent are correspondingly disposed, and the third vent is in communication with the second vent.

As a possible embodiment, the first heat exchanger is a plate type heat exchanger.

### BRIEF DESCRIPTION OF DRAWINGS

In order to illustrate the technical solutions in the embodiments of the present application or in the prior art more clearly, the following briefly introduces the accompanying drawings required for describing the embodiments or the prior art. Apparently, the accompanying drawings in the following description are some embodiments of the present application, and for those skilled in the art, other drawings may also be obtained according to these drawings without creative efforts.
FIG. 1 is a schematic structural diagram of an energy storage box provided by an embodiment of the present application.
FIG. 2 is a schematic diagram of an internal structure of an energy storage box provided by an embodiment of the present application.
FIG. 3 is a working principle diagram of a thermal management system of an energy storage box provided by an embodiment of the present application.
FIG. 4 is a top view of an energy storage box provided by an embodiment of the present application.
FIG. 5 is a front view of an energy storage box provided by an embodiment of the present application.

Description of the reference numbers:
100-energy storage box;
1-box body; 11-device control cabin;
2-battery pack; 21-first liquid path;
3-power conversion system; 31-second liquid path;
4-thermal management system; 41-first heat exchanger; 42-compressor;
43, 43a, 43b-second heat exchanger; 44, 44a, 44b-radiator;
45, 45a, 45b-solenoid valve; 46-oil separator; 47-gas-liquid separator;
48-first draught fan; 49-second draught fan;
491-first vent; 492-second vent; 493-third vent.

### DESCRIPTION OF EMBODIMENTS

In order to make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are merely a part rather than all of the embodiments of the present invention. Based on the embodiments of the present invention, all other embodiments obtained by persons of ordinary skill in the art without creative efforts shall belong to the scope of protection of the present invention. Without conflict, the following embodiments and features in the embodiments may be combined with each other.

In the technical fields of micro-grids or new energy power plants such as wind power plants, photovoltaic power plants, and the like, it is generally necessary to dispose an energy storage box so as to satisfy mobile power requirements.

The energy storage box includes a box body, a battery pack, a power conversion system (PCS), and a temperature control system. The PCS and the battery pack are correspondingly disposed so as to monitor charging and discharging processes of a battery. Since working temperatures of the PCS and the battery pack are different, the temperature control system performs heat exchange on the PCS in an air-cooling manner, and performs heat exchange on the battery pack in a liquid-cooling manner, so that the battery pack and the PCS work stably.

However, both working manners and control manners of air-cooling and liquid-cooling are different, which reduces a thermal management efficiency of the energy storage box.

In order to overcome the defects in the prior art, the present application provides an energy storage box, including a box body, a battery pack, a power conversion system, and a thermal management system. Where, the box body includes a battery cabin, the battery pack and the power conversion system are located in the battery cabin. The thermal management system has a first loop and a second loop. The first loop dissipates heat of a cooling liquid in a liquid-cooling loop of the battery pack through flowing refrigerant. A cooling liquid in the second loop flows in a liquid path of the power conversion system so as to dissipate heat of the power conversion system. When a temperature of the environment outside the box body is at a specific preset temperature value, the cooling liquid in the liquid path of the power conversion system may also flow to a liquid path of the battery pack through a solenoid valve, so as to reduce the working rotation speed of a compressor in the first loop, forming heat dissipation compensation for the liquid path of the battery pack. In this way, the thermal management system achieves the unification of heat dissipation manners in the energy storage box, and improves the integration level of the energy storage box, and reduces the overall structure of the energy storage box, and reduces the space occupation ratio of the energy storage box, thereby improving the energy density of a station. Meanwhile, the liquid path of the power conversion system compensates for heat dissipation of the liquid path of the battery pack, which can reduce the energy consumption of the first loop, thereby improving the energy density and energy storage efficiency of the station.

The following describes the content of the present invention in detail with reference to the accompanying drawings, so that those skilled in the art can understand the content of the present invention in more detail.

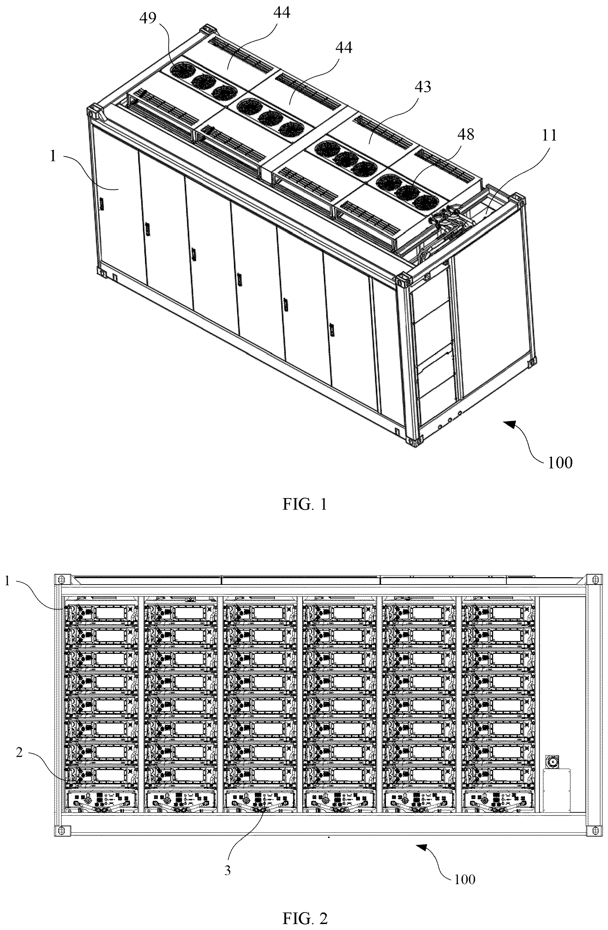

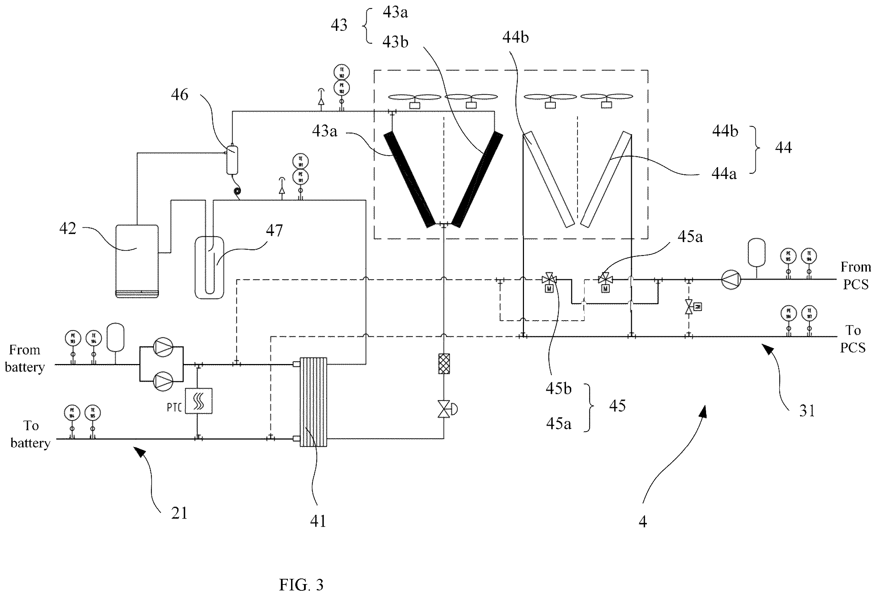

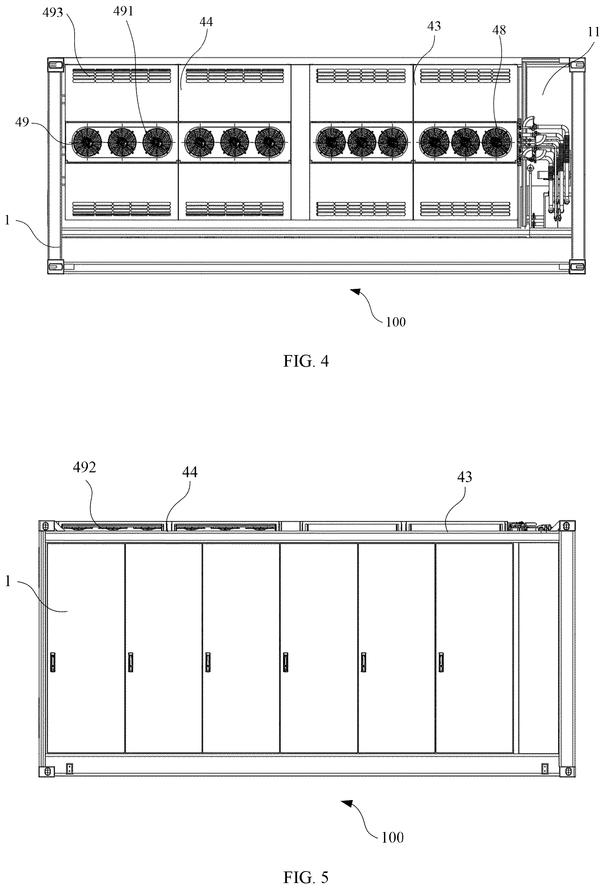

FIG. 1 is a schematic structural diagram of an energy storage box provided by an embodiment of the present application. FIG. 2 is a schematic diagram of an internal structure of an energy storage box provided by an embodiment of the present application. FIG. 3 is a working principle diagram of a thermal management system of an energy storage box provided by an embodiment of the present application. FIG. 4 is a top view of an energy storage box provided by an embodiment of the present application. FIG. 5 is a front view of an energy storage box provided by an embodiment of the present application. As shown in FIG. 1 to FIG. 5, an embodiment of the present application provides an energy storage box 100, including a box body 1, a battery pack 2, a power conversion system 3 and a thermal management system 4, where the box body 1 includes a battery cabin, the battery pack 2 and the power conversion system 3 are located in the battery cabin, and the power conversion system 3 is electrically connected with the battery pack 2. The battery pack 2 has a first liquid path 21, and the power conversion system 3 has a second liquid path 31.

The thermal management system 4 is partially located outside the battery cabin, and the thermal management system 4 includes a first loop, a second loop and a monitoring unit. The first loop includes a first heat exchanger 41, a compressor 42 and a second heat exchanger 43. The first heat exchanger 41, the compressor 42 and the second heat exchanger 43 are communicated head-to-tail in sequence. The first heat exchanger 41 and the first liquid path 21 are correspondingly disposed. A refrigerant flows in the first loop, the compressor 42 is configured to control the refrigerant to flow in the first loop so as to dissipate heat of a preset liquid in the first liquid path 21 by the refrigerant.

The second loop includes a radiator 44 and a solenoid valve 45, the second liquid path 31 is in communication with the radiator 44, the first liquid path 21 and the radiator 44 are connected in parallel to the second liquid path 31, and the solenoid valve 45 is disposed between the second liquid path 31 and the first liquid path 21.

The monitoring unit includes a temperature sensor and a controller. The temperature sensor is electrically connected with the controller. The temperature sensor is configured to monitor a temperature outside the box body 1. The controller is electrically connected with the solenoid valve 45 and the compressor 42, and the controller is configured to drive the solenoid valve 45 when the temperature is equal to a preset temperature value, so that a part of the preset liquid in the second liquid path 31 flows through the first liquid path 21.

In the present embodiment, the thermal management system 4 implements the unification of heat dissipation manners of the battery pack 2 and the power conversion system 3, and improves the integration level of the thermal management system 4 of the energy storage box 100. Meanwhile, working states of the first loop and the second loop, and communication states between the second liquid path 31 and the first liquid path 21 are adjusted by the controller according to the temperature outside the box body 1, so that the preset liquid in the second liquid path 31 flows into the first liquid path 21 of the battery pack 2. In this way, the preset liquid in the second liquid path 31 and the preset liquid in the first liquid path 21 together dissipate heat to the battery pack 2and the power conversion system 3, and at this time, the rotation speed of the compressor 42 may be gradually reduced, and the energy consumption of heat dissipation of the first loop is gradually reduced. Furthermore, compared with the prior art, the air-cooling heat dissipation structure of the power conversion system 3 is omitted, and the space occupation ratio of the overall structure of the energy storage box 100 is reduced, further improving the energy density of the energy storage station.

For example, the battery pack 2 and the power conversion system 3 in the present embodiment are located in the battery cabin, and the power conversion system 3 and the battery pack 2 are arranged at intervals along a height direction of the box body 1. It should be understood that the power conversion system 3 is located at a bottom of the box body 1. The battery pack 2 is provided with the first liquid path 21, and the power conversion system 3 is provided with the second liquid path 31. Both the first liquid path 21 and the second liquid path 31 are in communication with the thermal management system 4. The heat dissipation and cooling of the preset liquids in the first liquid path 21 and the second liquid path 31 are performed through the thermal management system 4. In this way, heat dissipation manners of the battery pack 2 and the power conversion system 3 are both implemented by the thermal management system 4, which changes the air-cooling heat dissipation manner of the power conversion system 3 and omits the air-cooling heat dissipation structure, so that both the battery pack 2 and the power conversion system 3 can be integrated in the battery cabin, thereby reducing the overall structure of the energy storage box 100 and reducing the space occupation ratio of the energy storage box 100. It should be understood that, in a station, the space occupation ratio of an individual energy storage box 100 decreases, which means that the total number of energy storage boxes 100 in the station increases, so that the energy density of the station and the total energy storage quantity of the station can be improved.

Further, the thermal management system 4 includes the first loop. The first loop performs heat exchange on the preset liquid in the first liquid path 21 of the battery pack 2 by the refrigerant, so as to implement heat dissipation of the battery pack 2, thereby simultaneously ensuring a working temperature of the battery pack 2 and ensuring security of the energy storage box 100. Specifically, the first loop includes the first heat exchanger 41, the compressor 42, and the second heat exchanger 43. The first heat exchanger 41, the compressor 42, and the second heat exchanger 43 are communicated in sequence to form a flow path of the refrigerant. Where, the first heat exchanger 41 and the first liquid path 21 are correspondingly disposed. A blade of the compressor 42 rotates, so as to compress the refrigerant into a high-temperature and high-pressure gaseous refrigerant, and discharge the high-temperature and high-pressure gaseous refrigerant to the second heat exchanger 43. Under the action of the second heat exchanger 43, the high-temperature and high-pressure gaseous refrigerant is converted into a low-temperature and high-pressure liquid to flow to the first heat exchanger 41 in the first loop. When the preset liquid in the first liquid path 21 of the battery pack 2 flows through the first heat exchanger 41, the preset liquid in the first liquid path 21 exchanges heat with the low-temperature liquid refrigerant in the first heat exchanger 41. The refrigerant absorbs heat of the preset liquid and is converted into gas, and then flows to the compressor 42 to complete a next refrigeration cycle. In this process, the preset liquid in the first liquid path 21 is implemented the decrease of the temperature under the action of the refrigerant, and continues to circulate in the first liquid path 21, and forms heat conduction with the battery pack 2 to take away the heat of the battery pack 2, achieving heat dissipation and cooling of the battery pack 2, and completing heat conduction with the refrigerant again in the next cycle. Repeating in this way, by means of the cooperation between the first loop and the first liquid path 21, the thermal management of the battery pack 2 is completed, so that the working temperature of the battery pack 2 is maintained stable.

On this basis, the thermal management system 4 further includes the second loop, and the preset liquid flows in the second loop. The second loop is in communication with the second liquid path 31 of the power conversion system 3 so as to form a path of the preset liquid. The preset liquid forms heat conduction with an external environment of the box body 1 in a flowing process, and circulates in the second loop and the second liquid path 31 to dissipate heat to the power conversion system 3. Specifically, the second loop includes the radiator 44, and the radiator 44 is in communication with the second liquid path 31. In the flowing process, the preset liquid in the second liquid path 31 forms heat conduction with the power conversion system 3 to dissipate heat of the power conversion system 3. The preset liquid continues to flow to the radiator 44, and the temperature of the preset liquid at the radiator 44 is higher than the temperature of external environment, so that heat can be released to the external environment through the radiator 44, and the temperature of the preset liquid decreases, and the preset liquid continues to flow into the second liquid path 31 and dissipates heat of the power conversion system 3 again. Repeating in this way, the preset liquid in the second liquid path 31 can continuously dissipate heat of the power conversion system 3, so as to maintain the working temperature of the power conversion system 3.

Further, the second loop also includes the solenoid valve 45. The solenoid valve 45 is disposed between the second liquid path 31 and the first liquid path 21, and the solenoid valve 45 can control the communication state between the second liquid path 31 and the first liquid path 21. When the solenoid valve 45 is closed, the first loop dissipates heat from the preset liquid in the first liquid path 21 of the battery pack 2, and the preset liquid in the second liquid path 31 of the power conversion system 3 is dissipated heat through the radiator 44 in the second loop, that is to say, heat dissipation control between the battery pack 2 and the power conversion system 3 is independent from each other. When the solenoid valve 45 is opened, the second liquid path 31 is in communication with the first liquid path 21 at this time, and when the preset liquid in the second liquid path 31 of the power conversion system 3 flows, a part of the preset liquid flows into the second loop, another part of the preset liquid flows into the first liquid path 21 and circulates in the first liquid path 21 to dissipate heat of the battery pack 2, thereby forming heat dissipation compensation of the preset liquid in the second liquid path 31 to the preset liquid in the first liquid path 21. Meanwhile, the opening degree of the solenoid valve 45 is controllable, so that the flow rate of the preset liquid flowing from the second liquid path 31 to the first liquid path 21 can be controlled. In this way, by controlling the flow rate of the preset liquid flowing from the second liquid path 31 to the first liquid path 21, the degree of heat dissipation compensation of the second liquid path 31 to the first liquid path 21 can be controlled. On the basis of satisfying the heat dissipation of the battery pack 2 and the power conversion system 3, the energy consumption of the thermal management system 4 is controlled so as to reduce the energy consumption of the thermal management system 4.

In the present embodiment, an opening-and-closing control of the solenoid valve 45 is achieved by the monitoring unit. Specifically, the monitoring unit includes the temperature sensor and the controller. The temperature sensor is disposed on the box body 1 and monitors the temperature of the environment outside the box body 1. The temperature sensor is electrically connected with the controller, and the controller is electrically connected with the solenoid valve 45. When the temperature outside the box body 1, monitored by the temperature sensor, is equal to the preset temperature value, the controller may control the solenoid valve 45 to be opened, so that the second liquid path 31 is in communication with the first liquid path 21. In this way, a part of the preset liquid in the second liquid path 31 may flow from the second liquid path 31 to the first liquid path 21, and mix with an original preset liquid in the first liquid path 21, and then circulate in the first liquid path 21 to dissipate heat of the battery pack 2. In this way, due to the introduction of the preset liquid in the second liquid path 31, the temperature of the preset liquid in the first liquid path 21 decreases, and it should be understood that, the relative working pressure of heat dissipation of the first loop decreases, and the compressor 42 may gradually slow down the operation, thereby reducing the energy consumption of the first loop, so as to reduce the overall energy consumption of the thermal management system 4.

It should be noted that, the preset liquid in the present embodiment is a cooling liquid, and a substance with a higher specific heat capacity of water, may be selected, so that a heat conduction effect of the preset liquid, circulating in the first liquid path 21, the second liquid path 31 and the second loop, is more significant. In addition, the solenoid valve 45 in the present embodiment is a three-way solenoid valve 45, and the preset temperature value is 0 to 20 degrees Celsius.

As a possible embodiment, when the temperature is less than the preset temperature value, the controller controls the refrigerant to stop flowing, and drives the solenoid valve 45, so that a part of the preset liquid in the second liquid path 31 flows through the first liquid path 21. The preset temperature value is 0 degrees Celsius. In this way, in the thermal management system 4, only through the preset liquid in the second liquid path 31 and the first liquid path 21, the battery pack 2 and the power conversion system 3 are simultaneously dissipated heat. At this time, the first loop may be completely non-working, and only through the second loop, the heat conduction between the preset liquid and the external environment is completed, thereby implementing a heat dissipation requirement of the energy storage box 100.

It should be understood that, the battery pack 2 and the power conversion system 3 in the energy storage box 100 have different temperature requirements for maintaining an efficient and stable operation. The temperature required by the battery pack 2 is lower than that of the power conversion system 3. In the present embodiment, when the temperature of the environment outside the box body 1 is low, the temperature of the preset liquid in the first liquid path 21 of the battery pack 2 is higher than the temperature of the environment outside the box body 1, and a temperature difference is formed, and during the process of flowing of the preset liquid, the heat conduction is naturally formed, that is, the preset liquid dissipates heat to the battery pack 2 through cold air outside the box body 1, and accordingly, the first loop may implement the heat dissipation of the battery pack 2 without working, so as to maintain the normal operation of the battery pack 2.

When the temperature of the environment becomes lower and lower, the temperature of the preset liquid in the first liquid path 21 also decreases accordingly, which easily leads to unstable working state of the battery pack 2. However, the temperature of the preset liquid in the second liquid path 31 of the power conversion system 3 is higher than the temperature of the preset liquid in the first liquid path 21, at this time, the preset liquid in the second liquid path 31 may be introduced into the first liquid path 21 to preserve heat of the battery pack 2, so that the thermal management may be performed on the battery pack 2 and the power conversion system 3 only through the second loop. Therefore, in a case that when the temperature of the environment outside the box body 1 is lower than 0 degrees Celsius, in the present embodiment, the controller controls the compressor 42 in the first loop to stop working, so that the refrigerant in the first loop stops flowing and does not exchange heat with the preset liquid in the first liquid path 21. Meanwhile, the controller opens the solenoid valve 45, so that the second liquid path 31 is in communication with the first liquid path 21, a part of the preset liquid in the second liquid path 31 flows into the first liquid path 21; and another part of the preset liquid circulates in the second loop, after forming heat exchange with the cold air outside the box body 1, then continues to flow into the second liquid path 31. In this way, in a low-temperature environment, a thermal management of the energy storage box 100 may be implemented only through the second loop, and on the basis of ensuring normal operation of the energy storage box 100, the operating energy consumption of the thermal management system 4 is reduced.

In order to ensure the heat dissipation efficiency of the second loop under various temperature conditions, in the present embodiment, there are at least two radiators 44, and at least two radiators 44 are connected in parallel to the second liquid path 31. There are at least two solenoid valves 45. One of the at least two solenoid valves 45 and one of the at least two radiators 44 are correspondingly disposed, and one of the at least two solenoid valves 45 is connected in series between the second liquid path 31 and corresponding radiator 44.

In the present embodiment, there are two radiators 44, and the two radiators 44 are connected in parallel to the second liquid path 31. In this way, when the preset liquid in the second liquid path 31 flows to the second loop, it is divided into two parts, and after passing through the two radiators 44, returns to the second liquid path 31. It should be understood that, the preset liquid in the second loop forms heat conduction with the air outside the box body 1 through the two radiators 44, so as to implement the change of the temperature of the preset liquid, thereby improving the heat dissipation efficiency of the power conversion system 3.

Further, in the present embodiment, the solenoid valve 45 and the radiator 44 are correspondingly disposed, that is to say, the solenoid valve 45a is connected in series to the radiator 44a, and the solenoid valve 45b is connected in series to the radiator 44b; correspondingly, the solenoid valve 45a is connected in series between the second liquid path 31 and the radiator 44a, and the solenoid valve 45b is connected in series between the second liquid path 31 and the radiator 44b. In other words, two solenoid valves 45 are connected in parallel to the second liquid path 31. By controlling the relative opening-and-closing states of the solenoid valve 45a and the solenoid valve 45b, the heat dissipation efficiency of the second loop may be controlled. Specifically, the solenoid valve 45a and the solenoid valve 45b may be alternatively opened, so that only one of the two radiators 44 in the second loop is working, and the heat dissipation requirement of the power conversion system 3 may be satisfied. When the temperature of the preset liquid in the second liquid path 31 increases, and the working of one radiator 44 may no longer satisfy the heat dissipation requirement, two solenoid valves 45 may be simultaneously opened, and correspondingly, the preset liquid in the second liquid path 31 forms a shunt in the second loop, flowing to the radiator 44a and the radiator 44b respectively, and the radiator 44a and the radiator 44b simultaneously work so as to improve the heat exchange efficiency between the preset liquid in the second loop and the air outside the box body 1; then the working temperature of the power conversion system 3 is maintained within an appropriate range, thereby ensuring stable operation of the energy storage box 100.

Further, in the present embodiment, the solenoid valve 45a and the solenoid valve 45b are both connected in series to the first loop, and a parallel relationship is formed between the solenoid valve 45a and the solenoid valve 45b. In combination with the above-mentioned embodiments, the solenoid valve 45a and the solenoid valve 45b may be alternatively opened, so that the second liquid path 31 is in communication with the first liquid path 21. For example, when the solenoid valve 45a is opened, the second liquid path 31 is in communication with the radiator 44a in the second loop through the solenoid valve 45a, and the second liquid path 31 is in communication with the first liquid path 21 through the solenoid valve 45a. In this way, a part of the preset liquid in the second liquid path 31 flows to the first liquid path 21 through the solenoid valve 45a, then returns to the second liquid path 31, and at the same time, the preset liquid in the second liquid path 31 is dissipated heat through the radiator 44a in the second loop. When the solenoid valve 45b is opened, the working principle of the thermal management system 4 is the same as the principle of only opening the solenoid valve 45a, which is not repeated herein.

It should not be difficult to be understood that, when the solenoid valve 45a and the solenoid valve 45b are simultaneously opened, the preset liquid in the second liquid path 31 may flow to the first liquid path 21 through both solenoid valves 45, and after circulating in the first liquid path 21, return to the second liquid path 31; and finally under the action of the radiator 44 of the second loop, the heat exchange between the preset liquid and the air outside the box body 1 is completed, so that the thermal management efficiency of the thermal management system 4 can be controlled.

When the temperature outside the box body 1 is 0 to 20 degrees Celsius, due to the opening of the solenoid valve 45, the heat dissipation of the preset liquid in the first liquid path 21 is completed under a combined action of the first loop, the second liquid path 31 and the second loop. It should be understood that, the second liquid path 31 and the second loop form a compensation effect for the heat dissipation of the first liquid path 21, that is to say, a requirement for the preset liquid in the first liquid path 21 to dissipate heat through the first loop would be reduced; accordingly, the compressor 42 may be appropriately adjusted so as to reduce the rotation speed, so that the energy consumption of the compressor 42 may be correspondingly reduced, so as to achieve the effect of reducing the overall energy consumption of the thermal management system 4.

It should be noted that, in the present embodiment, the number of the radiator 44 and the solenoid valve 45 are not limited to the two mentioned in the foregoing embodiments, and the number of the radiator 44 and the solenoid valve 45 may be selected according to a thermal management requirement of the energy storage box 100, which is not specifically limited in the present embodiment.

As a possible embodiment, the first loop further includes an oil separator 46 and a gas-liquid separator 47, the oil separator 46 is disposed between the compressor 42 and the second heat exchanger 43; and the compressor 42, the oil separator 46 and the second heat exchanger 43 are sequentially communicated. The gas-liquid separator 47 is disposed between the first heat exchanger 41 and the compressor 42; and the first heat exchanger 41, the gas-liquid separator 47 and the compressor 42 are sequentially communicated. In the present embodiment, through the arrangement of the oil separator 46 and the gas-liquid separator 47, the heat dissipation efficiency of the first loop to the preset liquid in the first liquid path 21 can be improved, meanwhile, the energy consumption of the first loop can be reduced.

The blades in the compressor 42 rotate to compress the refrigerant and discharge it. It is inevitable that a certain amount of lubricating oil is brought out from the compressor 42. The lubricating oil has a certain lubrication effect on the flow of the refrigerant, and may also ensure the operation reliability of the first loop at the same time. However, an accumulation of the lubricating oil in the first loop would cause the refrigerant flowing unsmoothly, and the heat dissipation effect of the first loop on the preset liquid in the first liquid path 21 becomes poor; and in order to ensure the heat dissipation effect of the preset liquid in the first liquid path 21, the power of the compressor 42 would be increased, which leads to an increase of the energy consumption of the first loop. Therefore, in the present embodiment, the oil separator 46 is disposed between the compressor 42 and the second heat exchanger 43; and the compressor 42, the oil separator 46 and the second heat exchanger 43 are sequentially communicated. The compressor 42 works to discharge the high-temperature and high-pressure gaseous refrigerant to the oil separator 46, and the lubricating oil discharged together with the refrigerant also enters the oil separator 46, they would be separated in the oil separator 46, and finally only the high-temperature and high-pressure gaseous refrigerant is discharged. The high-temperature and high-pressure gaseous refrigerant forms a rapid heat exchange with the outside of the box body 1 at the second heat exchanger 43, and at this time, the high-temperature and high-pressure gaseous refrigerant is converted into the low-temperature and high-pressure liquid refrigerant.

The liquid refrigerant flows to the first heat exchanger 41, and at the first heat exchanger 41, completes heat exchange with the preset liquid in the first liquid path 21 of the battery pack 2. At this time, the liquid refrigerant is converted into a gaseous refrigerant again, and the gaseous refrigerant completes a next heat dissipation cycle under the action of the compressor 42. During this process, transitions of the refrigerant of two different forms of gas phase and liquid phase are formed in the first loop. Since components in the first loop communicate with each other, the refrigerant flows in the first loop under the action of the compressor 42. In order to prevent the liquid refrigerant from entering the compressor 42 and adhering to the blades of the compressor 42, which causes the effect of the compressor 42 on the gaseous refrigerant to be weakened, in the present embodiment, the gas-liquid separator 47 is connected in series between the first heat exchanger 41 and the compressor 42; and the first heat exchanger 41, the gas-liquid separator 47 and the compressor 42 are sequentially communicated. The gas-liquid separator 47 performs gas-liquid separation on the refrigerant flowing from the first heat exchanger 41 to the compressor 42, so as to ensure that the refrigerant flowing to the compressor 42 is in a gaseous state as far as possible. In this way, the compressing effect of the compressor 42 on the refrigerant may be improved, and then the heat dissipation effect and the working efficiency of the first loop may be improved.

In order to improve the heat dissipation efficiency of the first loop to the first liquid path 21, in the present embodiment, there are at least two second heat exchangers 43, and the at least two second heat exchangers 43 are connected in parallel between the compressor 42 and the first heat exchanger 41.

For example, in the present embodiment, there are two second heat exchangers 43, the second heat exchanger 43a is in communication with the compressor 42 and the first heat exchanger 41, the second heat exchanger 43b is in communication with the compressor 42 and the first heat exchanger 41, and the second heat exchanger 43a and the second heat exchanger 43b are connected in parallel in the first loop. In this way, the high-temperature and high-pressure gaseous refrigerant discharged by the compressor 42 is divided into two paths in the first loop, and the two paths enter the second heat exchanger 43a and the second heat exchanger 43b, and perform a rapid heat exchange with the air outside the box body 1 at the second heat exchanger 43a and the second heat exchanger 43b respectively, which converts the high-temperature and high-pressure gaseous refrigerant into the low-temperature and high-pressure liquid refrigerant; the liquid refrigerant flows to the first heat exchanger 41, and performs heat exchange with the preset liquid in the first liquid path 21 at the first heat exchanger 41, thereby implementing heat dissipation of the preset liquid in the first liquid path 21. In this way, by arranging the two second heat exchangers 43, a conversion rate of the refrigerant may be improved, and the working efficiency of the thermal management system is improved.

It should be noted that, in the present embodiment, the number of the second heat exchanger 43 is not limited to two as mentioned in the foregoing embodiments, and the number of the second heat exchanger 43 may be selected according to a thermal management requirement of the energy storage box 100, which is not specifically limited in the present embodiment.

In some embodiments, the box body 1 further includes a device control cabin 11, the device control cabin 11 and the battery cabin are disposed at intervals along a length direction of the box body 1, the compressor 42 is located in the device control cabin 11, and a top of the device control cabin 11 is in communication with the outside of the box body 1. In this way, a part of components of the thermal management system 4 are arranged outside the battery cabin, so that the temperature of the environment in the battery cabin is suitable, and the working stability of the battery pack 2 and the power conversion system 3 is improved.

On the basis of the foregoing embodiment, the second heat exchanger 43 and the radiator 44 are disposed at intervals along the length direction of the box body 1 at an outer top of the box body 1. In this way, the second heat exchanger 43 and the radiator 44 are disposed at the top of the box body 1, which relatively increases a contact area between the second heat exchanger 43 and the air outside the box body 1, and between the radiator 44 and the air outside the box body 1, so that heat exchange rates between the second heat exchanger 43 and the air outside the box body 1, and between the radiator 44 and the air outside the box body 1 are increased, thereby improving the heat dissipation efficiency and heat dissipation effect of the thermal management system 4 on the battery pack 2 and the power conversion system 3.

As shown in FIG. 1, FIG. 4 and FIG. 5, in the present embodiment, two radiators 44 are disposed at intervals along the length direction of the box body 1 on a side away from the device control cabin 11. Two second heat exchangers 43 are disposed at intervals along the length direction of the box body 1 on a side close to the device control cabin 11, and the two second heat exchangers 43 are in communication with the compressor 42 in the device control cabin 11. In this way, the relative distance between the second heat exchanger 43 and the compressor 42 is shortened, so that a flow path of the refrigerant in the first loop is shortened, a thermal loss of the refrigerant in the flowing process is reduced, and the thermal management efficiency of the thermal management system 4 for the battery pack 2 and the power conversion system 3 is further ensured.

Further, the thermal management system 4 further includes a first draught fan 48 and a second draught fan 49, the first draught fan 48 and the second heat exchanger 43 are correspondingly disposed, the first draught fan 48 is connected with a top of the box body 1, and the first draught fan 48 is configured to dissipate heat of the second heat exchanger 43. The second draught fan 49 and the radiator 44 are correspondingly disposed, the second draught fan 49 is connected with the top of the box body 1, and the second draught fan 49 is configured to dissipate heat of the radiator 44. In this way, by arranging the first draught fan 48 and the second draught fan 49, the heat exchange rates between the second heat exchanger 43 and the air outside the box body 1, and between the radiator 44 and the air outside the box body 1 are increased.

As shown in FIG. 1, FIG. 4 and FIG. 5, in the present embodiment, the first draught fan 48 and the second heat exchanger 43 are correspondingly disposed, and the first draught fan 48 is disposed at the outer top of the box body 1. The refrigerant flows in the second heat exchanger 43, and implements heat exchange with ambient air through the second heat exchanger 43, and it should be understood that, the temperature of the ambient air of the second heat exchanger 43 increases, and a change of a flow velocity of hot air affects the heat exchange efficiency of the refrigerant at the second heat exchanger 43. Therefore, in the present embodiment, the first draught fan 48 is started; the first draught fan 48 may blow air to the second heat exchanger 43, and may also suck out the hot air at the second heat exchanger 43, in this way, accumulation of the hot air at the second heat exchanger 43 may be reduced, thereby improving the heat dissipation effect and efficiency of the first loop for the preset liquid in the first liquid path 21.

Similarly, the second draught fan 49 and the radiator 44 are correspondingly disposed, and the second draught fan 49 is disposed at the outer top of the box body 1. The preset liquid in the second liquid path 31 flows in the radiator 44 of the second loop, and implements heat exchange with ambient air through the radiator 44, and it should be understood that, the temperature of the ambient air of the radiator 44 increases, and a change of a flow velocity of hot air affects the heat exchange efficiency of the preset liquid at the radiator 44. Therefore, in the present embodiment, the second draught fan 49 is started; the second draught fan 49 may blow air to the radiator 44, and may also suck out the hot air at the radiator 44, in this way, accumulation of the hot air at the radiator 44 may be reduced, thereby improving the heat dissipation effect and efficiency of the second loop for the preset liquid in the second liquid path 31.

Specifically, as shown in FIG. 1, FIG. 4 and FIG. 5, at least one of the first draught fan 48 and the second draught fan 49 includes a housing and a fan, the housing has an accommodating cavity, a top of the accommodating cavity has a first vent 491, and the fan is located in the accommodating cavity so as to discharge air in the accommodating cavity along the first vent 491. A side wall of the housing is provided with a second vent, the second vent 492 is in communication with the accommodating cavity, a top of the housing is provided with a third vent 493, the third vent 493 and the second vent 492 are correspondingly disposed, and the third vent 493 is in communication with the second vent 492. In this way, through a structural arrangement of the first draught fan 48 and the second draught fan 49, an air flow path is formed: the second vent 492 - the fan - the first vent 491. The third vent 493 is in communication with the second vent 492, so as to supplement the above-mentioned air flow path and increase an air intake volume in the accommodating cavity. In this way, the air flow rate may be improved, and the flow of the hot air at the second heat exchanger 43 and the radiator 44 is further improved.

For example, the first heat exchanger 41 is a plate type heat exchanger.

The embodiments of the present application provide an energy storage box, including a box body, a battery pack, a power conversion system and a thermal management system. The box body includes a battery cabin, the battery pack and the power conversion system are located in the battery cabin. The power conversion system is electrically connected with the battery pack. The battery pack has a first fluid path. The power conversion system has a second fluid path. The thermal management system is partially located outside the battery cabin, and the thermal management system includes a first loop, a second loop and a monitoring unit. The first loop includes a first heat exchanger, a compressor and a second heat exchanger. The first heat exchanger, the compressor and the second heat exchanger are communicated head-to-tail in sequence. The first heat exchanger and the first liquid path are correspondingly disposed. A refrigerant flows in the first loop. The compressor is configured to control the refrigerant to flow in the first loop so as to dissipate heat of a preset liquid in the first liquid path by the refrigerant. The second loop includes a radiator and a solenoid valve, the second liquid path is in communication with the radiator, the first liquid path and the radiator are connected in parallel to the second liquid path, and the solenoid valve is disposed between the second liquid path and the first liquid path. The monitoring unit includes a temperature sensor and a controller, the temperature sensor is electrically connected with the controller, the temperature sensor is configured to monitor a temperature outside the box body, and the controller is electrically connected with the solenoid valve and the compressor. The controller is configured to drive the solenoid valve when the temperature is equal to a preset temperature value, so that a part of the preset liquid in the second liquid path flows through the first liquid path. Through such a structural arrangement, the thermal management efficiency of the energy storage box is improved, and the energy consumption is reduced at the same time.

It should be noted that, references in the specification to "one embodiment", "embodiment", "exemplary embodiment", "some embodiments" etc., indicate that the described embodiment may include a particular feature, structure, or characteristic, but each embodiment may not necessarily include the particular feature, structure, or characteristic. Furthermore, such phrases are not necessarily referring to the same embodiment. Furthermore, when a particular feature, structure, or characteristic is described in connection with an embodiment, it is within the knowledge of those skilled in the art to implement such feature, structure, or characteristic in connection with other embodiments that are explicitly or implicitly described.

In general, terms should be understood at least partially from usage in the context. For example, depending at least in part on the context, the term "one or more" as used herein may be used to describe any feature, structure, or characteristic in the singular, or may be used to describe a combination of features, structures, or characteristics in the plural. Similarly, depending at least in part on the context, terms such as "a" or "the" may also be understood as conveying singular usage or plural usage.

It should be easily understood that, "on", "above" and "over" in the present application should be interpreted in the broadest way, so that "on" not only means "directly on something", but also includes "on something" with an intermediate feature or layer therebetween. Further, "above" or "over" not only includes the meaning of "above something" or "over", but also includes "above something" or "over" without an intermediate feature or layer (namely, directly on something) therebetween.

Furthermore, for the convenience of description, spatially relative terms, such as "below", "under", "beneath", "above", "top" and the like, may be used herein to describe the illustrated relationship of one element or feature with respect to other element(s) or feature(s). Spatially relative terms are intended to encompass different orientations of the device in use or operation other than the orientation shown in the drawings. The device may have other orientations (rotated 90 degrees or in other orientations), and the spatially relative descriptors used herein may also be interpreted accordingly.

Finally, it should be noted that, the foregoing embodiments are merely intended for illustrating the technical solutions of the present invention, but not intended to limit it. Although the present invention is described in detail with reference to the foregoing embodiments, it should be understood by those skilled in the art that, the technical solutions described in the foregoing embodiments may still be modified, or some or all technical features thereof may be replaced by equivalents. However, these modifications or replacements do not make the essence of the corresponding technical solutions depart from the scope of the technical solutions of the embodiments of the present invention.

## Claims

1. An energy storage box (100), comprising a box body (1), a battery pack (2), a power conversion system (3) and a thermal management system (4); wherein the box body (1) comprises a battery cabin, the battery pack (2) and the power conversion system (3) are located in the battery cabin, the power conversion system (3) is electrically connected with the battery pack (2), the battery pack (2) has a first liquid path (21), and the power conversion system (3) has a second liquid path (31);
wherein the thermal management system (4) is partially located outside the battery cabin, the thermal management system (4) comprises a first loop, a second loop and a monitoring unit; the first loop comprises a first heat exchanger (41), a compressor (42) and a second heat exchanger (43); the first heat exchanger (41), the compressor (42) and the second heat exchanger (43) are communicated head-to-tail in sequence, the first heat exchanger (41) and the first liquid path (21) are correspondingly disposed; a refrigerant flows in the first loop, the compressor (42) is configured to control the refrigerant to flow in the first loop so as to dissipate heat of a preset liquid in the first liquid path (21) by the refrigerant;
wherein the second loop comprises a radiator (44) and a solenoid valve (45), the second liquid path (31) is in communication with the radiator (44), the first liquid path (21) and the radiator (44) are connected in parallel to the second liquid path (31), and the solenoid valve (45) is disposed between the second liquid path (31) and the first liquid path (21);
wherein the monitoring unit comprises a temperature sensor and a controller, the temperature sensor is electrically connected with the controller, the temperature sensor is configured to monitor a temperature outside the box body, the controller is electrically connected with the solenoid valve (45) and the compressor (42); the controller is configured to drive the solenoid valve (45) when the temperature is equal to a preset temperature value, so that a part of the preset liquid in the second liquid path (31) flows through the first liquid path (21).

2. The energy storage box according to claim 1, wherein when the temperature is less than the preset temperature value, the controller controls the refrigerant to stop flowing, and drives the solenoid valve (45), so that a part of the preset liquid in the second liquid path (31) flows through the first liquid path (21);
the preset temperature value is 0 degrees Celsius.

3. The energy storage box according to claim 1, wherein there are at least two radiators (44), and the at least two radiators (44) are connected in parallel to the second liquid path (31);
there are at least two solenoid valves (45), one of the at least two solenoid valves (45) and one of the at least two radiators (44) are correspondingly disposed, and one of the at least two solenoid valves (45) is connected in series between the second liquid path (31) and corresponding radiator (44).

4. The energy storage box according to any one of claims 1 to 3, wherein the first loop further comprises an oil separator (46) and a gas-liquid separator (47), the oil separator (46) is disposed between the compressor (42) and the second heat exchanger (43); and the compressor (42), the oil separator (46) and the second heat exchanger (43) are sequentially communicated;
the gas-liquid separator (47) is disposed between the first heat exchanger (41) and the compressor (42); and the first heat exchanger (41), the gas-liquid separator (47) and the compressor (42) are sequentially communicated.

5. The energy storage box according to claim 4, wherein there are at least two second heat exchangers (43), and the at least two second heat exchangers (43) are connected in parallel between the compressor (42) and the first heat exchanger (41).

6. The energy storage box according to any one of claims 1 to 3, wherein the box body (1) further comprises a device control cabin (11), the device control cabin (11) and the battery cabin are disposed at intervals along a length direction of the box body, the compressor (42) is located in the device control cabin (11), and a top of the device control cabin (11) is in communication with the outside of the box body (1).

7. The energy storage box according to claim 6, wherein the second heat exchanger (43) and the radiator (44) are disposed at intervals along the length direction of the box body (1) at an outer top of the box body (1).

8. The energy storage box according to claim 7, wherein the thermal management system (4) further comprises a first draught fan (48) and a second draught fan (49), the first draught fan (48) and the second heat exchanger (43) are correspondingly disposed, the first draught fan (48) is connected with a top of the box body (1), and the first draught fan (48) is configured to dissipate heat of the second heat exchanger (43);
the second draught fan (49) and the radiator (44) are correspondingly disposed, the second draught fan (49) is connected with the top of the box body (1), and the second draught fan (49) is configured to dissipate heat of the radiator (44).

9. The energy storage box according to claim 8, wherein at least one of the first draught fan (48) and the second draught fan (49) comprises a housing and a fan, the housing has an accommodating cavity, a top of the accommodating cavity has a first vent (491), and the fan is located in the accommodating cavity so as to discharge air in the accommodating cavity along the first vent (491);
a side wall of the housing is provided with a second vent (492), the second vent (492) is in communication with the accommodating cavity; a top of the housing is provided with a third vent (493), the third vent (493) and the second vent (492) are correspondingly disposed, and the third vent (493) is in communication with the second vent (492).

10. The energy storage box according to any one of claims 1 to 3, wherein the first heat exchanger (41) is a plate type heat exchanger.

## Patentansprüche

1. Energiespeicherkasten (100), umfassend einen Kastenkörper (1), ein Batteriepack (2), ein Leistungswandlungssystem (3) und ein Wärmemanagementsystem (4); wobei der Kastenkörper (1) ein Batteriefach umfasst, sich das Batteriepack (2) und das Leistungswandlungssystem (3) in dem Batteriefach befinden, das Leistungswandlungssystem (3) elektrisch mit dem Batteriepack (2) verbunden ist, das Batteriepack (2) einen ersten Flüssigkeitspfad (21) aufweist und das Leistungswandlungssystem (3) einen zweiten Flüssigkeitspfad (31) aufweist;
wobei sich das Wärmemanagementsystem (4) teilweise außerhalb des Batteriefachs befindet, das Wärmemanagementsystem (4) einen ersten Kreislauf, einen zweiten Kreislauf und eine Überwachungseinheit umfasst; der erste Kreislauf einen ersten Wärmetauscher (41), einen Kompressor (42) und einen zweiten Wärmetauscher (43) umfasst; der erste Wärmetauscher (41), der Kompressor (42) und der zweite Wärmetauscher (43) Kopf an Fuß nacheinander in Verbindung miteinander stehen, der erste Wärmetauscher (41) und der erste Flüssigkeitspfad (21) entsprechend angeordnet sind; ein Kältemittel in dem ersten Kreislauf fließt, der Kompressor (42) konfiguriert ist, um das Kältemittel zu steuern, um im ersten Kreislauf zu fließen, um Wärme einer voreingestellten Flüssigkeit in dem ersten Flüssigkeitspfad (21) durch das Kältemittel abzuführen;
wobei der zweite Kreislauf einen Kühler (44) und ein Magnetventil (45) umfasst, der zweite Flüssigkeitspfad (31) mit dem Kühler (44) in Verbindung steht, der erste Flüssigkeitspfad (21) und der Kühler (44) parallel mit dem zweiten Flüssigkeitspfad (31) verbunden sind und das Magnetventil (45) zwischen dem zweiten Flüssigkeitspfad (31) und dem ersten Flüssigkeitspfad (21) angeordnet ist;
wobei die Überwachungseinheit einen Temperatursensor und eine Steuereinheit umfasst, der Temperatursensor elektrisch mit der Steuerung verbunden ist, der Temperatursensor konfiguriert ist, um eine Temperatur außerhalb des Kastenkörpers zu überwachen, die Steuereinheit elektrisch mit dem Magnetventil (45) und dem Kompressor (42) verbunden ist; die Steuereinheit konfiguriert ist, um das Magnetventil (45) anzutreiben, wenn die Temperatur gleich einem voreingestellten Temperaturwert ist, sodass ein Teil der voreingestellten Flüssigkeit im zweiten Flüssigkeitspfad (31) durch den ersten Flüssigkeitspfad (21) fließt.

2. Energiespeicherkasten nach Anspruch 1, wobei die Steuereinheit, wenn die Temperatur geringer als der voreingestellte Temperaturwert ist, das Kältemittel steuert, um den Fluss zu stoppen, und das Magnetventil (45) antreibt, sodass ein Teil der voreingestellten Flüssigkeit im zweiten Flüssigkeitspfad (31) durch den ersten Flüssigkeitspfad (21) fließt;
der voreingestellte Temperaturwert 0 Grad Celsius beträgt.

3. Energiespeicherkasten nach Anspruch 1, wobei mindestens zwei Kühler (44) vorhanden sind und die mindestens zwei Kühler (44) parallel mit dem zweiten Flüssigkeitspfad (31) verbunden sind;
mindestens zwei Magnetventile (45) vorhanden sind, eines der mindestens zwei Magnetventile (45) und einer der mindestens zwei Kühler (44) entsprechend angeordnet sind, und eines der mindestens zwei Magnetventile (45) zwischen dem zweiten Flüssigkeitspfad (31) und dem entsprechenden Kühler (44) in Reihe verbunden ist.

4. Energiespeicherkasten nach einem der Ansprüche 1 bis 3, wobei der erste Kreislauf weiter einen Ölabscheider (46) und einen Gas-Flüssigkeits-Abscheider (47) umfasst, der Ölabscheider (46) zwischen dem Kompressor (42) und dem zweiten Wärmetauscher (43) angeordnet ist; und der Kompressor (42), der Ölabscheider (46) und der zweite Wärmetauscher (43) nacheinander in Verbindung stehen;
der Gas-Flüssigkeits-Abscheider (47) zwischen dem ersten Wärmetauscher (41) und dem Kompressor (42) angeordnet ist; und der erste Wärmetauscher (41), der Gas-Flüssigkeits-Abscheider (47) und der Kompressor (42) nacheinander in Verbindung stehen.

5. Energiespeicherkasten nach Anspruch 4, wobei mindestens zwei zweite Wärmetauscher (43) vorhanden sind und die mindestens zwei zweiten Wärmetauscher (43) zwischen dem Kompressor (42) und dem ersten Wärmetauscher (41) parallel verbunden sind.

6. Energiespeicherkasten nach einem der Ansprüche 1 bis 3, wobei der Kastenkörper (1) weiter ein Vorrichtungssteuerfach (11) umfasst, das Vorrichtungssteuerfach (11) und das Batteriefach in Abständen entlang einer Längsrichtung des Kastenkörpers angeordnet sind, der Kompressor (42) sich in dem Vorrichtungssteuerfach (11) befindet und eine Oberseite des Vorrichtungssteuerfachs (11) mit der Außenseite des Kastenkörpers (1) in Verbindung steht.

7. Energiespeicherkasten nach Anspruch 6, wobei der zweite Wärmetauscher (43) und der Kühler (44) in Abständen entlang der Längsrichtung des Kastenkörpers (1) an einer äußeren Oberseite des Kastenkörpers (1) angeordnet sind.

8. Energiespeicherkasten nach Anspruch 7, wobei das Wärmemanagementsystem (4) weiter ein erstes Zuggebläse (48) und ein zweites Zuggebläse (49) umfasst, das erste Zuggebläse (48) und der zweite Wärmetauscher (43) entsprechend angeordnet sind, das erste Zuggebläse (48) mit einer Oberseite des Kastenkörpers (1) verbunden ist und das erste Zuggebläse (48) konfiguriert ist, um die Wärme des zweiten Wärmetauschers (43) abzuführen;
das zweite Zuggebläse (49) und der Kühler (44) entsprechend angeordnet sind, das zweite Zuggebläse (49) mit der Oberseite des Kastenkörpers (1) verbunden ist und das zweite Zuggebläse (49) konfiguriert ist, um die Wärme vom Kühler (44) abzuführen.

9. Energiespeicherkasten nach Anspruch 8, wobei mindestens eines von dem ersten Zuggebläse (48) und dem zweiten Zuggebläse (49) ein Gehäuse und ein Gebläse umfasst, das Gehäuse einen Aufnahmehohlraum aufweist, eine Oberseite des Aufnahmehohlraums eine erste Entlüftung (491) aufweist und sich das Gebläse in dem Aufnahmehohlraum befindet, um Luft im Aufnahmehohlraum entlang der ersten Entlüftung (491) abzugeben;
eine Seitenwand des Gehäuses mit einer zweiten Entlüftung (492) bereitgestellt ist, die zweite Entlüftung (492) mit dem Aufnahmehohlraum in Verbindung steht; eine Oberseite des Gehäuses mit einer dritten Entlüftung (493) bereitgestellt ist, die dritte Entlüftung (493) und die zweite Entlüftung (492) entsprechend angeordnet sind und die dritte Entlüftung (493) mit der zweiten Entlüftung (492) in Verbindung steht.

10. Energiespeicherkasten nach einem der Ansprüche 1 bis 3, wobei der erste Wärmetauscher (41) ein Plattenwärmetauscher ist.

## Revendications

1. Boîte de stockage d'énergie (100), comportant un corps de boîte (1), un bloc-batterie (2), un système de conversion de puissance (3) et un système de gestion thermique (4) ; dans lequel le corps de boîte (1) comporte un boîtier de batterie, le bloc-batterie (2) et le système de conversion de puissance (3) sont situés dans le boîtier de batterie, le système de conversion de puissance (3) est connecté électriquement au bloc-batterie (2), le bloc-batterie (2) présente un premier trajet de liquide (21), et le système de conversion de puissance (3) présente un deuxième trajet de liquide (31) ;
dans laquelle le système de gestion thermique (4) est partiellement situé à l'extérieur du boîtier de batterie, le système de gestion thermique (4) comporte une première boucle, une deuxième boucle et une unité de surveillance ; la première boucle comporte un premier échangeur de chaleur (41), un compresseur (42) et un deuxième échangeur de chaleur (43) ; le premier échangeur de chaleur (41), le compresseur (42) et le deuxième échangeur de chaleur (43) sont mis en communication de tête à queue en séquence, le premier échangeur de chaleur (41) et le premier trajet de liquide (21) sont disposés de manière correspondante ; un réfrigérant s'écoule dans la première boucle, le compresseur (42) est configuré pour commander le réfrigérant pour qu'il s'écoule dans la première boucle de manière à dissiper la chaleur d'un liquide prédéfini dans le premier trajet liquide (21) par le réfrigérant ;
dans laquelle la deuxième boucle comporte un radiateur (44) et une électrovanne (45), le deuxième trajet de liquide (31) est en communication avec le radiateur (44), le premier trajet de liquide (21) et le radiateur (44) sont reliés en parallèle au deuxième trajet de liquide (31), et l'électrovanne (45) est disposée entre le deuxième trajet de liquide (31) et le premier trajet de liquide (21) ;
dans lequel l'unité de surveillance comporte un capteur de température et un dispositif de commande, le capteur de température est connecté électriquement au dispositif de commande, le capteur de température est configuré pour surveiller une température à l'extérieur du corps de boîte, le dispositif de commande est connecté électriquement à l'électrovanne (45) et au compresseur (42) ; le dispositif de commande est configuré pour entraîner l'électrovanne (45) lorsque la température est égale à une valeur de température prédéfinie, de sorte qu'une partie du liquide prédéfini dans le deuxième trajet de liquide (31) s'écoule à travers le premier trajet de liquide (21).

2. Boîte de stockage d'énergie selon la revendication 1, dans laquelle lorsque la température est inférieure à la valeur de température prédéfinie, le dispositif de commande commande le réfrigérant pour arrêter l'écoulement, et entraîne l'électrovanne (45), de sorte qu'une partie du liquide prédéfini dans le deuxième trajet de liquide (31) s'écoule à travers le premier trajet de liquide (21) ;
la valeur de température prédéfinie est de 0 degré Celsius.

3. Boîte de stockage d'énergie selon la revendication 1, dans laquelle il existe moins deux radiateurs (44), et les au moins deux radiateurs (44) sont reliés en parallèle au deuxième trajet de liquide (31) ;
il existe au moins deux électrovannes (45), l'une des au moins deux électrovannes (45) et l'un des au moins deux radiateurs (44) sont disposés de manière correspondante, et l'une des au moins deux électrovannes (45) est reliée en série entre le deuxième trajet de liquide (31) et le radiateur (44) correspondant.

4. Boîte de stockage d'énergie selon l'une quelconque des revendications 1 à 3, dans laquelle la première boucle comporte en outre un séparateur d'huile (46) et un séparateur gaz-liquide (47), le séparateur d'huile (46) est disposé entre le compresseur (42) et le deuxième échangeur de chaleur (43) ; et le compresseur (42), le séparateur d'huile (46) et le deuxième échangeur de chaleur (43) sont mis en communication séquentiellement ;
le séparateur gaz-liquide (47) est disposé entre le premier échangeur de chaleur (41) et le compresseur (42) ; et le premier échangeur de chaleur (41), le séparateur gaz-liquide (47) et le compresseur (42) sont mis en communication séquentiellement.

5. Boîte de stockage d'énergie selon la revendication 4, dans laquelle il existe au moins deux deuxièmes échangeurs de chaleur (43), et les au moins deux deuxièmes échangeurs de chaleur (43) sont reliés en parallèle entre le compresseur (42) et le premier échangeur de chaleur (41).

6. Boîte de stockage d'énergie selon l'une quelconque des revendications 1 à 3, dans laquelle le corps de boîte (1) comporte en outre un boîtier de commande de dispositif (11), le boîtier de commande de dispositif (11) et le boîtier de batterie sont disposés à intervalles le long d'une direction longitudinale du corps de boîte, le compresseur (42) est situé dans le boîtier de commande de dispositif (11), et une partie haute du boîtier de commande de dispositif (11) est en communication avec l'extérieur du corps de boîte (1).

7. Boîte de stockage d'énergie selon la revendication 6, dans laquelle le deuxième échangeur de chaleur (43) et le radiateur (44) sont disposés à intervalles le long de la direction longitudinale du corps de boîte (1) au niveau d'une partie haute externe du corps de boîte (1).

8. Boîte de stockage d'énergie selon la revendication 7, dans laquelle le système de gestion thermique (4) comporte en outre un premier ventilateur de tirage (48) et un deuxième ventilateur de tirage (49), le premier ventilateur de tirage (48) et le deuxième échangeur de chaleur (43) sont disposés de manière correspondante, le premier ventilateur de tirage (48) est relié à une partie haute du corps de boîte (1), et le premier ventilateur de tirage (48) est configuré pour dissiper la chaleur du deuxième échangeur de chaleur (43) ;
le deuxième ventilateur de tirage (49) et le radiateur (44) sont disposés de manière correspondante, le deuxième ventilateur de tirage (49) est relié à la partie haute du corps de boîte (1), et le deuxième ventilateur de tirage (49) est configuré pour dissiper la chaleur du radiateur (44).

9. Boîte de stockage d'énergie selon la revendication 8, dans laquelle au moins l'un parmi le premier ventilateur de tirage (48) et le deuxième ventilateur de tirage (49) comprend un logement et un ventilateur, le logement présente une cavité d'accueil, une partie haute de la cavité d'accueil présente un premier évent (491) et le ventilateur est situé dans la cavité d'accueil de manière à évacuer de l'air dans la cavité d'accueil le long du premier évent (491) ;
une paroi latérale du logement est pourvue d'un deuxième évent (492), le deuxième évent (492) est en communication avec la cavité d'accueil ; une partie haute du logement est pourvue d'un troisième évent (493), le troisième évent (493) et le deuxième évent (492) sont disposés de manière correspondante, et le troisième évent (493) est en communication avec le deuxième évent (492).

10. Boîte de stockage d'énergie selon l'une quelconque des revendications 1 à 3, dans laquelle le premier échangeur de chaleur (41) est un échangeur de chaleur de type à plaques.
